# EUROPEAN PATENT APPLICATION

(11) **EP 4 420 510 A1**
(43) Date of publication of application: **28.08.2024**
(21) Application number: 23157792.5
(22) Date of filing: 21.02.2023
(51) Int. Cl.: A01G 3/00

(54) **LEAF SHREDDING DEVICE, LEAF PROCESSING SYSTEM, AND VEHICLE**

(71) Applicant: GKB Machines B.V., 2992 SP Barendrecht (NL)
(72) Inventor: Kraaijeveld, Hendrik, 2992 SH Barendrecht (NL); Kraaijeveld, Adrianus, 3342 AB Hendrik-Ido-Ambacht (NL)
(74) Representative: Arnold & Siedsma

(57) **Abstract**

Leaf shredding device, comprising a housing with at least one opening for input and/or output of leaves, a shaft mounted in the housing and rotatable about a rotation axis, at least one first cutting element that, at least in use, extends radially outwardly from the shaft and that is rotatable about the rotation axis, wherein a free end of the first cutting element distal from the shaft defines a path by rotation about the rotation axis, at least one second cutting element that is displaced from the at least one first cutting element in the longitudinal direction of the shaft and is located, at least in a cutting position thereof, within the path of the first cutting element as seen along the longitudinal direction of the shaft, such that the at least one first cutting element moves along the at least one second cutting element so as to cut leaves therebetween, the device further comprising a spacer with a base and at least one row of spaced-apart teeth extending from the base and away from the shaft, the row extending substantially in longitudinal direction of the shaft, and the spacer being located outside the path of the first cutting element and positioned such that each of the at least one second cutting elements is located, at least in the cutting position thereof, between two of the spaced-apart teeth.

## Description

### TECHNICAL FIELD

The present disclosure relates to a leaf shredding device, a leaf processing system and a vehicle.

### BACKGROUND

Fallen leaves (e.g., from trees or bushes or the like), simply referred to as leaves herein, are a problem in the sense that they smother the grass on grassland if they are not removed from it. In urban areas, leaves should also be removed from streets, gardens and the like. When collecting leaves, a voluminous mass of leaves is created, the transport and processing of which is impractical and also not environmentally friendly, for example due to the CO₂ emissions associated with the transport of large volumes. It is noted that in the context of the present disclosure, leaves or leaf litter may also include other types of litter such as small branches, pieces of soil or grass or the like, or other biological or compostable materials. Naturally, such items may also be processed along with leaves and the like, and are thus considered part of the leaves or leaf litter as used herein.

Devices for shredding leaves are known in the art. An example of such device can be found in patent document NL 2025008. Such device may comprise a housing with at least one opening for input and/or output of leaves, a shaft mounted in the housing and rotatable about a rotation axis, a first cutting element that, at least in use, extends radially outwardly from the shaft and that is rotatable about the rotation axis, wherein a free end of the first cutting element distal from the shaft defines a path by rotation about the rotation axis, and a second cutting element that is displaced from the at least one first cutting element in the longitudinal direction of the shaft and is located, at least in a cutting position thereof, within the path of the first cutting element as seen along the longitudinal direction of the shaft, such that the at least one first cutting element moves along the at least one second cutting element so as to cut leaves therebetween.

In practice, it turns out that devices for shredding leaves, such as the one present above, require regular maintenance and are prone to wear. This affects the employability and thus profitability of the device in practice. It is one object of the present disclosure, among others, to alleviate at least part of these drawbacks of the state of the art.

### SUMMARY

Accordingly, according to a first aspect of the present disclosure, a leaf shredding device is provided which comprises a housing with at least one opening for input and/or output of leaves, a shaft mounted in the housing and rotatable about a rotation axis, at least one first cutting element that, at least in use, extends radially outwardly from the shaft and that is rotatable about the rotation axis, wherein a free end of the first cutting element distal from the shaft defines a path by rotation about the rotation axis, and at least one second cutting element that is displaced from the at least one first cutting element in the longitudinal direction of the shaft and is located, at least in a cutting position thereof, within the path of the first cutting element as seen along the longitudinal direction of the shaft, such that the at least one first cutting element moves along the at least one second cutting element so as to cut leaves therebetween, wherein the device is characterized by a spacer with a base and at least one row of spaced-apart teeth extending from the base and (at least partially) away from the shaft, the row extending substantially in longitudinal direction of the shaft, and the spacer being located outside the path of the first cutting element and positioned such that each of the at least one second cutting elements is located, at least in the cutting position thereof, between two of the spaced-apart teeth.

On the one hand, the spaced-apart teeth of the spacer of the device controls the relative positioning of the first and second cutting elements in the direction of the longitudinal direction of the shaft, such that the first and second cutting elements can be configured to move past each other closely without colliding with one another. Firstly, this improves the cutting ability of the device, i.e., the leaves can be shredded very finely as compared to shredders according to the state of the art. Secondly, this improves wear resistance as the cutting elements are prevented from colliding.

On the other hand, the spaced-apart teeth do not hinder the movement of the first or second cutting elements in the radial direction of the shaft, such that, for instance, the second cutting elements can move away from the shaft if suitably configured for such movement, for example to prevent damage in the case items that are hard or impossible to cut enter the device.

Moreover, the base of the spacer, from which the spaced-apart teeth extend, may additionally act as a stop against which the at least one second cutting element abut in the cutting position. In a preferred embodiment, the base may be adjustable (e.g., movable and/or rotatable) in order to adjust the cutting position of the second cutting element(s).

According to the above, the presently disclosed device according to the first aspect described above alleviates at least part of the aforementioned drawbacks of the state of the art, amongst other advantages.

Optionally, in the device of the first aspect, the spacer comprises at least two of the row of spaced apart teeth, wherein the rows are spaced apart from each other. Two or more rows of the spaced-apart teeth provide further stability for the second cutting element(s), Accordingly, the position of the second cutting element(s) in the longitudinal direction of the shaft is controlled to an even higher degree. Particularly, the second cutting element(s) may be made of sheets of material, e.g., sheet metal, and may therefore be flexible to a certain extent. During movement of the device, the second cutting elements could therefore "swing" to a certain extent (in longitudinal direction of the shaft), which may cause them to collide with the rotating first cutting element(s). The space-apart teeth mitigate this issue.

Optionally, the device of the first aspect further comprises at least one third cutting element located at the same position as the at least one first cutting element as seen in the longitudinal direction of the shaft, and located on or outside the path of the first cutting element as seen along the longitudinal direction, such that the at least one first cutting element moves along the third cutting element so as to cut leaves therebetween. Preferably, the at least one third cutting element is mounted to the base of the spacer. Additionally or alternatively, the at least one third cutting element is releasably mounted, so as to be replaceable, and/or the third cutting element is a single elongate cutting element that extends in the longitudinal direction of the shaft. The third cutting element may face a direction toward the shaft in the radial direction of the shaft. The third cutting element may be formed as a triangular knife, wherein preferably the base of the triangular shape of the knife is attached to the base of the spacer and the apex of the triangular shape is pointed substantially in direction of the shaft. As the first cutting element(s) move closely pas the third cutting element(s), potential debris that is stuck to the free end of the first cutting element(s) can be removed by the third cutting element(s). The third cutting element(s) can remain stationary whilst the first cutting element(s) move past it. As the third cutting element, particularly the effective cutting part thereof, is placed very close to the path of the first cutting element(s), the first cutting element(s) may slightly contact the third cutting element(s) in practice (e.g., due to heating and thus expanding of the cutting elements), which means that the third cutting element may wear relatively quickly. Accordingly, it is beneficial when the third cutting element(s) is releasably mounted, as noted above.

Optionally, the device of the first aspect comprises a plurality of first and/or second cutting elements. Preferably, the first and second cutting elements are alternately placed in the longitudinal direction of the shaft. Preferably, multiple first cutting elements can be placed at the same position relative to the longitudinal direction, but at different positions relative to the tangential direction of the shaft. In other words, multiple first cutting elements may be placed around the shaft, preferably at regular angular intervals. The device may additionally or alternatively comprise a plurality of third cutting elements.

Optionally, in the device of the first aspect, the at least one second cutting element is pivotable about a pivot axis between the cutting position, and a release position wherein the at least one second cutting element is located outside the path of the first cutting element as seen along the longitudinal direction of the shaft, such that material that is not suitable to be cut can pass between the path and the at least one second cutting element. Preferably, each of the at least one second cutting elements is located between two of the spaced-apart teeth of the spacer in both the cutting position and the release position thereof. When picking up and/or sweeping up leaves, material that is difficult or impossible to cut is sometimes picked up and/or swept up. When such material is fed to the leaf shredding device with or without leaves, it may cause the leaf shredding device to jam, or to be damaged. By allowing the at least one second cutting element to pivot about the pivot axis, a space can be left between the respective cutting element and the at least one first cutting element. This allows said material to escape without jamming and/or damaging the leaf shredding device. The cutting position and the release position can be defined separately for each second cutting element, for example when they are pivotable independently of each other. In that case, the cutting position is still closer to the shaft than the release position for the respective cutting element. When several second cutting elements are fixedly connected to each other, there can be a joint cutting position and release position. Several second cutting elements can of course be pivotable independently.

Optionally, in the device of the first aspect, the at least one second cutting element rests against the base of the spacer when in the cutting position. Accordingly, the base of the spacer acts as a stop, as explained above.

Preferably, the first cutting element is pivotable about a pivot axis, which is connected to the shaft and rotates with the shaft. Preferably, the pivot axis of the first cutting element is parallel to the longitudinal axis and the rotation axis of the shaft. Accordingly, when the shaft spins up, the first cutting element(s) move to their outermost position in the radial direction (with their free end). In other words, rotation of the shaft creates a centrifugal force, as a result of which the at least first cutting element is directed radially outwardly by pivoting about its pivot axis. The pivotability of the first cutting elements with respect to the shaft may prevent damage due to materials that are difficult or impossible to cut. When the at least one first cutting element comes into contact with material that cannot be cut or can only be cut poorly, the at least one first cutting element can deflect by pivoting about its pivot axis. As a result, damage to the at least one first cutting element can be prevented or limited. If the material which cannot be cut or cannot be cut is no longer in the device, the at least one first cutting element is again directed radially outwards by the same centrifugal force, whereby the at least one first cutting element can again be used for cutting the leaves. Preferably, multiple of said pivot axes are provided, each with first cutting elements attached thereto, at multiple angular positions around the shaft and its rotation axis. In particular, at least two adjacent first cutting elements can be pivotable about the same pivot axis. As a result, depending on the position of the leaf, in many cases a leaf is cut by two cutting elements simultaneously, so that the leaf is cut relatively small.

Preferably, the first and/or second cutting element(s) may be formed from a plate material. The first cutting element(s) may comprises, at their free end, a cutting head. The cutting head preferably has a line of symmetry along the longitudinal direction of the respective first cutting element. The cutting head preferably has a flat top end, at a location corresponding to the free end of the respective first cutting element. The cutting head preferably narrows linearly from the flat top end in a direction away from the free end of the respective first cutting element, preferably until a semi-circle cutout is reached. The semi-circle cutout is cut out from a side of the first cutting element. When the cutting head is symmetric, the mounting orientation is irrelevant, which reduces labor during maintenance. Moreover, one first cutting element can potentially be used two times, if the rotation direction of the shaft is always the same, which reduces material costs associated with maintenance of the device. The linearly narrowing portion and the semi-circle cutout provide an aggressive shape that has shown to provide a good cutting performance as well as longevity.

In a second aspect of the disclosure, a leaf processing system is provided, which comprises a leaf shredding device of any of the aforementioned embodiments of the first aspect of the disclosure, and a centrifugal fan, comprising a fan housing that houses a fan shaft rotatable about a second rotation axis and at least one fan blade that extends radially outwardly from the fan shaft and is rotatable about the second rotation axis by the fan shaft, wherein the fan housing comprises at least one inlet opening, substantially coaxial with the fan shaft and at least one outlet opening that is configured to be connected to the opening of the leaf shredding device.

Preferably, the fan shaft is substantially parallel to the shaft of the leaf shredding device. In practice such arrangement of the fan provides a larger and more evenly distributed vacuum, such that the efficiency of taking in leaves from a surface is improved accordingly.

In landscaping activities, lawn aeration devices can be used, that are configured to aerate a grassland (such as a golf course or the like) by creating holes in the soil. Aerating a lawn may promote the growth of grass, and/or may improve soil drainage. In addition, organisms that require oxygen (such as worms) may benefit from aeration. Particularly, such lawn aeration device may comprise spike aerators (e.g., spikes) that punch holes in the soil, or core aerators (e.g., hollow tines) that pull out plugs of soil from the grassland. Such aerators are generally known to the skilled person. In particular, when the core aerators are used in a certain area, the processing system according to the second aspect may also be utilized in that area for processing the plugs of soil (or "cores") left on the surface by the described aeration devices. The cores can be taken in by the system and processed in the same way as leaves and branches and the like, and are thus considered to be part of leaves or leaf litter as used herein.

Optionally, in the system of the second aspect, the at least one fan blade is pivotable relative to the fan shaft. Accordingly, when the fan shaft spins up, the fan blade(s) move to their outermost position in the radial direction, so as to provide the largest amount of suction force (i.e., vacuum). In addition, when material other than leaves is swept or sucked up by the device that may be too large or heavy, the pivotable fan blades may also pivot away from such material in order to prevent damage. Accordingly, the pivotable aspect of the fan blades with respect to the fan shaft provides advantages in performance as well as robustness.

Optionally, in the system of the second aspect, the fan shaft extends through at least one inlet opening, the fan shaft further comprising at least one fourth cutting element that extends radially outwardly from the fan shaft and is rotatable about the second rotation axis by the fan shaft, wherein the at least one fourth cutting element is located outside the housing or in the at least one inlet opening. The fourth cutting element may also be referred to as a branch cutter. The fourth cutting element is able to break apart larger objects that are sucked into the device, such as tree branches that often accompany leaf litter. Accordingly, the fourth cutting element prevents damage to the fan and the leaf shredding device due to larger objects, by attempting to break them apart before they enter the interior of the system.

Optionally, in the system of the second aspect, the fan housing comprises two inlet openings, one on each side of the housing. Additionally, the fan shaft extends through both inlet openings, and at least two of the aforementioned fourth cutting elements extend radially outwardly from the fan shaft at both sides of the fan housing.

The present disclosure also relates to a centrifugal fan as described above, with or without its optional features, as a separate entity, separate from the aforementioned system.

Preferably, the system of the second aspect further comprises an outlet device coupled to the opening of the leaf shredding device, that is configured to receive and transport output material (i.e., shredded leaf litter) from the leaf shredding device. Preferably, the outlet device comprises a spreader with a rotating disc, preferably wherein the rotating disc is horizontally oriented. Particles such as shredded leaf litter that come into contact with the rotating disc are hurled from the disc in a radial direction thereof. The exact direction in which the particles are thrown depends on the position on the disc that they contact, such that the particles are spread out over the surface on which the system is used. Spreading the shredded leaf litter prevents the leaf litter from once again smothering the surface, such as the grass. Furthermore, spreading the shredded leaves provides compost for the surface, which may positively affect the foliage that grows on the surface, such as grass. It is to be noted that leaves have a relatively large surface area compared to shredded leaves, accordingly shredded leaves necessarily have a smaller chance of smothering the underlying grassland as compared to non-shredded leaves. Additionally or alternatively, the outlet device may comprise a compactor, which is configured to receive and subsequently compact the shredded leaf litter exiting the leaf shredding device. The compacted leaf litter may then be expelled from the system, for instance by dropping the compacted litter or ejecting it with the aforementioned spreader. Alternatively, it is possible to provide a waste container to which the outlet device outputs the shredded leaf litter, such that the shredded leaves may be disposed of at a different location at another time.

In a third aspect of the disclosure, a vehicle is provided, which comprises a leaf processing system according to any of the aforementioned embodiments of the second aspect of the disclosure. The vehicle is movable, for instance by its own moving means (e.g., drive means or the like) and/or by a second towing or pushing vehicle. The vehicle preferably comprises means for picking and/or sweeping up leaves, such that the leaves are moved in the direction of the at least one inlet opening of the fan housing. The means for picking and/or sweeping up leaves may comprise a scoop element or the like, which may be shaped as a blade of a shovel or the like. Preferably, the scoop element is provided on a rotating shaft. Preferably, the scoop element is pivotable relative to the rotating shaft. The scoop element assists in propelling the leaves on the ground towards the fan and leaf shredding device. A plurality of scoop elements may be provided.

For example, the vehicle may be pulled by a tractor or other vehicle. The vehicle may additionally or alternatively be driven by an individual drive train, which may comprise electric motors or the like. The vehicle may comprise wheels and associated suspension and the like for suitable movement along relevant surfaces, such as grasslands, farm fields, paved or unpaved streets, et cetera. Wheels also include known alternatives such as continuous track or the like. The vehicle may be provided with a brush or bristle at the trailing end of the vehicle, which is configured to sweep the surface on which the vehicle moves. In the case of grassland, this sweeping re-erects the blades of grass, such that the leaf litter is more easily deposited between said blades so as to prevent smothering of the grass.

### BRIEF DESCRIPTION OF THE DRAWINGS

The disclosure is hereinafter elucidated with reference to the appended drawings, wherein:
- FIG. 1 shows schematic side view of a vehicle with a leaf processing system;
- FIG. 2 shows a schematic side view of a leaf shredding device of the leaf processing system of FIG. 1;
- FIG. 3 shows a perspective view a vehicle with a leaf processing system;
- FIG. 4 shows a perspective view of the leaf processing system of the vehicle of FIG. 3;
- FIG. 5A shows a rear perspective view of a spacer for a leaf shredding device;
- FIG. 5B shows a rear perspective view of part of a leaf shredding device with the spacer of FIG. 5A;
- FIG. 6A shows a front perspective view of the spacer of FIG. 5A; and
- FIG. 6B shows a front perspective view of the leaf shredding device of FIG. 5B.

### DETAILED DESCRIPTION

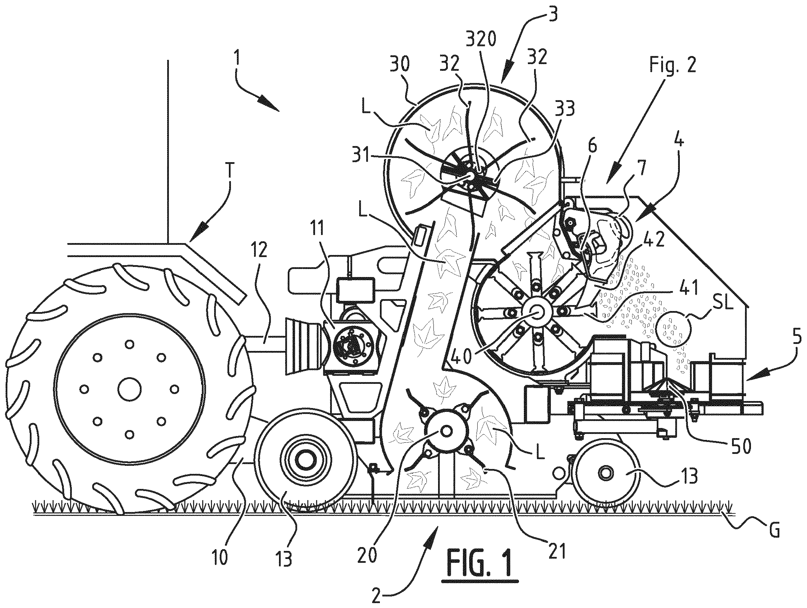

In FIG. 1, a leaf processing vehicle 1 is shown. In the present example, the vehicle 1 is pulled and powered by a tractor T. The vehicle 1 is thus provided with a pull bar 10 and a power receiver 11, which is coupled to a power transmitter 12 of the tractor T. The power transmitter 12 may be a power take-off (PTO) as generally known by the skilled person. The vehicle 1 further comprises wheels 13 that enable the vehicle 1 to be moved across the surface G, which is a grassland G in this example. The vehicle 1 is further provided with a leaf intake 2 through which leaves L enter the leaf processing vehicle 1. The leaf intake 2 has a drive shaft 20 and scooping elements 21 that are pivotably coupled to the drive shaft 20. As the scooping elements 21 rotate with the drive shaft 20, they scoop up leaves L that come into contact therewith to propel the leaves L towards the centrifugal fan 3. The fan 3 has a fan housing 30 in which a fan shaft 31 is mounted. Fan blades 32 are pivotally mounted to the fan shaft 31, and thus rotate with the fan shaft 31 once the centrifugal force is sufficient. The fan 3 provides a suction force by creating a vacuum near the intake 2, such that leaves L that lie on the grassland G are sucked up into the intake 2. Through an outlet of the fan 3, the leaves L then move into a leaf shredding device 4, also referred to as leaf shredder 4. The leaf shredder 4 is configured for shredding leaves L as further elucidated below. Once the leaves L have been shredded by the leaf shredder 4, they are expelled as shredded leaves SL towards the outlet device 5 of the vehicle 1. In the present example, the outlet device 5 comprises a disc spreader 50 that is configured to spread out, i.e., scatter, the shredded leaves SL over the grassland G. The disc spreader 50 comprises a spinning disc or cone that scatters material deposited thereon in various radial directions.

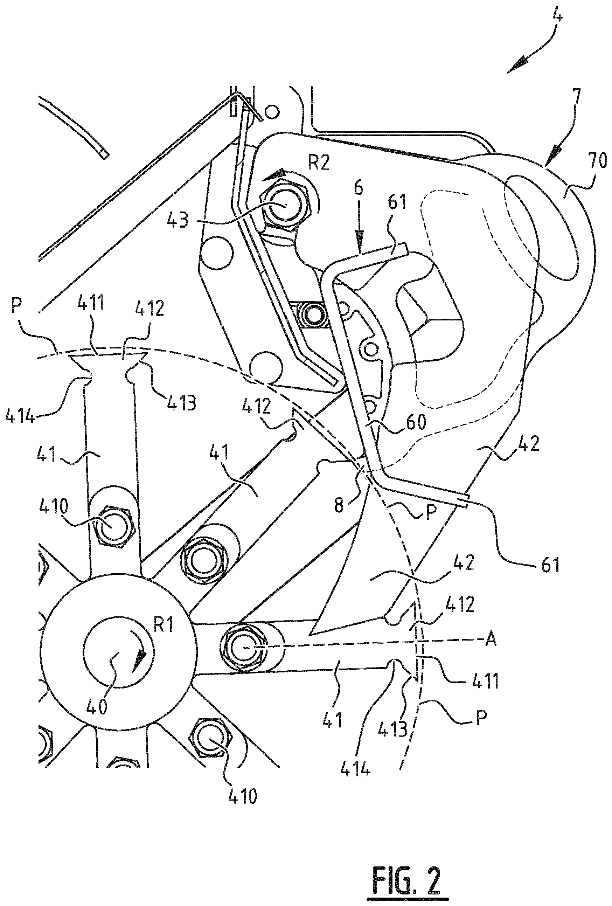

In FIG. 2 a partial schematic side view of a leaf shredder 4 is shown, which may correspond to the leaf shredder 4 of FIG. 1. The leaf shredder 4 comprises a rotating shaft 40, that rotates about a first rotation axis R1. On the rotating shaft 40 several first cutting elements 41 are pivotally mounted. The first cutting elements 41 are pivotable about a first pivot axis 410. In FIG. 2 a situation is shown in which free ends 411 extend away from the shaft 40. This is generally the case when the shaft 40 is rotating at a sufficient rate to bring the first cutting elements 41 into these positions by means of the centrifugal force generated thereby. When the shaft 40 is not rotating, the free ends 411 generally hang in a downward direction due to gravity. The first cutting elements 41 are provided with cutting heads 412 that are shown to be symmetrical about a longitudinal axis A of the first cutting element 41. The cutting heads 412 have a tapering edge 413 that tapers towards a semi-circle cutout 414. The tapering edge 413 narrows the first cutting element 41 from its free edge 311 in direction of its first pivot axis 410, until its reaches the semi-circle cutout 414. The cutting heads 412 are symmetrical such that they can be reversed without consequence, and are shaped such that leaves L are easily teared apart thereby.

Still referring to FIG. 2, the shredder 4 further comprises second cutting elements 42. The second cutting elements 42 are pivotally coupled to a pivot bar 43 such that they are pivotable about a second rotation axis R2. The first rotation axis R1 and the second rotation axis R2 are preferably parallel to each other. The second cutting elements 42 are displaced in longitudinal direction of the shaft 40 with respect to the first cutting elements 41, such that the first 41 and second cutting elements 42 can pass each other without colliding. When the first cutting elements 41 are rotating around the shaft 40, their free ends 411 and cutting heads 412 define a path P. When the second cutting elements 42 are in the cutting position, they are located within the area encircled by the path P, as shown here in FIG. 2. Accordingly, when the second cutting elements 42 are in the cutting position, leaves L can be cut between the rotating first cutting elements 41 and the second cutting elements 42 in a scissor-like fashion. The second cutting elements 42 are biased towards their cutting position by their own weight, i.e., they hang downwards.

The shredder 4 is also provided with a spacer 6. The spacer 6 is supported by support plates 7, which may also be pivotable about the second rotation axis R2 as they are suspended from the pivot bar 43. The support plates 7 may be fastened such that they do not rotate freely, but may be adjustable in position so as to change the position of the spacer 6. The spacer 6 is provided with a base plate 60 (also referred to as base 60) and two rows of spaced-apart teeth 61 extending from the base 60. The spaced-apart teeth 61 are spaced apart in the longitudinal direction of the shaft 40 in such a way that each second cutting element 42 is located, at least in the cutting position, between two of the spaced-apart teeth 61. Accordingly, the teeth 61 act as spacers between the second cutting elements 42, such that they retain their position in the direction of the longitudinal axis of the shaft 40. Two rows of teeth 61 provide at least two contact points between the spacer 6 and the second cutting elements 42 for stability. In the cutting position, the second cutting elements 42 rest against the base 60 of the spacer 6. Accordingly, the base 60 also acts as a stop for the second cutting elements 42. As noted above, the base 60 is movable, such that it acts as an adjustable stop. The locations of the teeth 61 of the spacer 6 in the longitudinal direction of the shaft 40 may correspond to such locations of the first cutting elements 41. Note that the spacer 6 is located fully outside the perimeter of the path P.

Further provided on the spacer 6 is a third cutting element 8, which may also be referred to as a scraper 8. The scraper 8 is essentially a elongate triangular knife, wherein the knife's edge (i.e., the edge pointing away from the spacer 6) essentially closely abuts the path P of the first cutting elements 41. The scraper 8 is preferably elongated in the longitudinal direction of the shaft 40. The scraper 8 scrapes material from the free end 411 and cutting head 412 of the first cutting elements 41. The scraper 8 is preferably releasably mounted to the base 60 of the spacer 6, so as to be replaceable. The support plates 7 further comprise handles 70, which may be used to pivot the spacer 6 and thereby also the second cutting elements 42 away from the first cutting elements 41 and shaft 40 about the second rotation axis R2, such that the interior of the shredder 4 becomes accessible (e.g., for maintenance or the like).

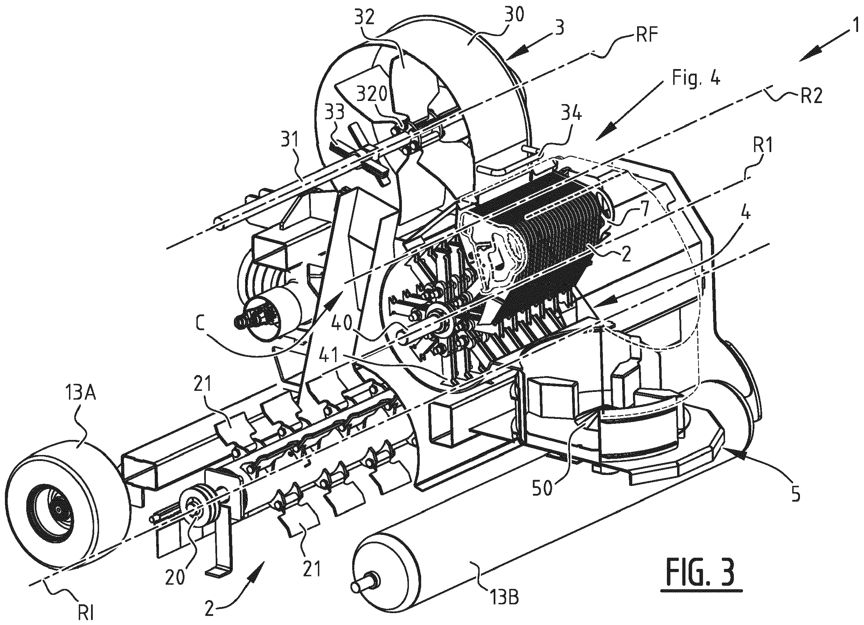

FIG. 3 shows a perspective view a leaf processing vehicle 1 with a leaf processing system having an intake 2, a fan 3, a leaf shredder 4, and an outlet device 5. The vehicle 1 may correspond to the vehicle 1 of FIG. 1. Parts of the vehicle 1 are taken away, to show the inner workings of the intake 2, fan 3, shredder 4 and outlet 5. The vehicle 1 has at one end (leading end) tires 13A as wheels 13, and at another end (trailing end) a roller 13B as a wheel 13. The roller 13B can in certain cases be equipped with bristles for brushing the grassland G at the trailing end of the vehicle 1.

In order to process leaves L (not shown here), the vehicle 1 has an intake 2 with a drive shaft 20 and scooping elements 21 that are pivotably coupled to the drive shaft 20. As the scooping elements 21 rotate with the drive shaft 20 about the intake rotation axis RI, they scoop up leaves L that come into contact therewith to propel the leaves L towards an intake channel C leading to the centrifugal fan 3.

Two intake channels C are provided at either side of the fan 3, which terminate at intake inlets at the sides of the housing 30 of the fan 3. The fan shaft 31 is rotatable about a fan rotation axis RF and extends through the intake inlets of the fan housing 30 from one side to the other. The shaft 31 is provided with branch cutters 33 (also referred to as fourth cutting element). The branch cutters 33 may cut larger objects that are sucked towards the fan 3 before they enter the fan 3, so as to prevent damage and/or blocking of the fan 3 and/or its intake inlet(s). The branch cutters 33 extend radially outwardly from the fan shaft 31 and may or may not be pivotably coupled to the fan shaft 31. In the shown example they are not pivotally coupled to the fan shaft 31, but instead rigidly coupled thereto. The fan blades 32 of the fan 3 are pivotally attached to the fan shaft 31. Each fan blade 32 thus comprises a pivot axis defined by the bolt 320 with which they are coupled to the shaft 31. The housing 30 of the fan 3 is pivotally attached to the frame of the vehicle 1, and may be opened by operating the handle 34 attached to the housing 30. By rotation of the blades 32 about the fan rotation axis RF leaves L are sucked up into the fan 3 and are subsequently expelled towards the leaf shredder 4.

The leaves L thus enter the leaf shredder 4 and are shredded by rotation of the first cutting elements 41 about the first rotation axis R1 of the shaft 40 of the shredder 4, and the substantially stationary second cutting elements 42, as well as the scraper 8 to a certain extend (see FIG. 2). As noted earlier, the second cutting elements 42 and the spacer 6 are rotatable about the second rotation axis R2 defined by the pivot bar 43 by operating the handles 70 of the support plates 7. The shredded leaves SL can leave the shredder 4 to the outlet device 5, which in the present example comprises a disc spreader 50 to scatter the shredder leaf litter SL onto the surface G, such as grassland G, on which the vehicle 1 operates.

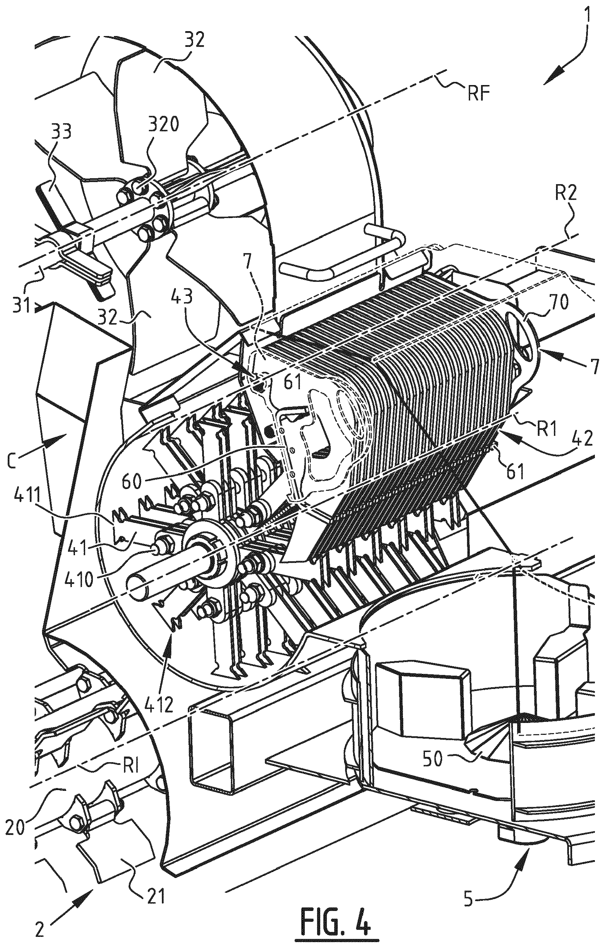

FIG. 4 shows an enlargement of part of FIG. 3 (as indicated in FIG. 3), so as to enlarge certain details of the intake 2, fan 3, shredder 4 and outlet 5. The elements indicated are as described above for the preceding figures.

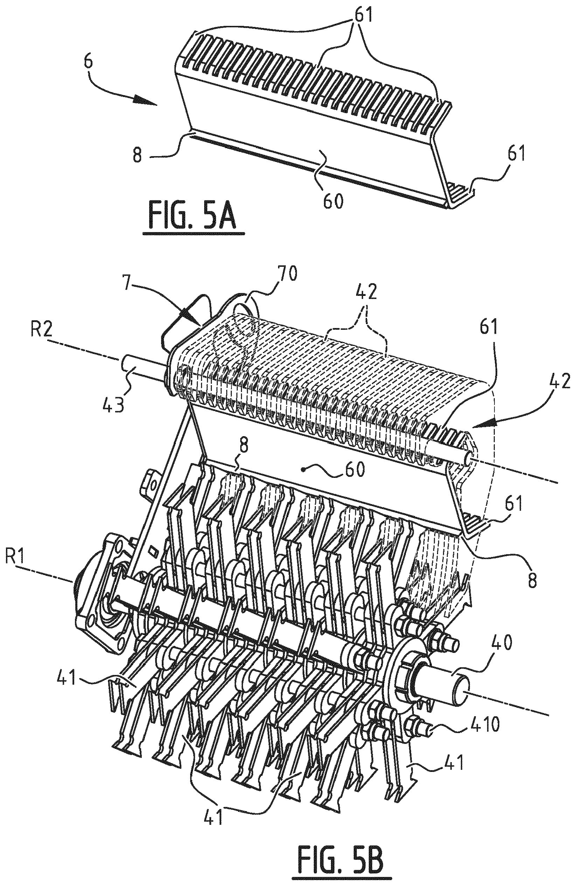

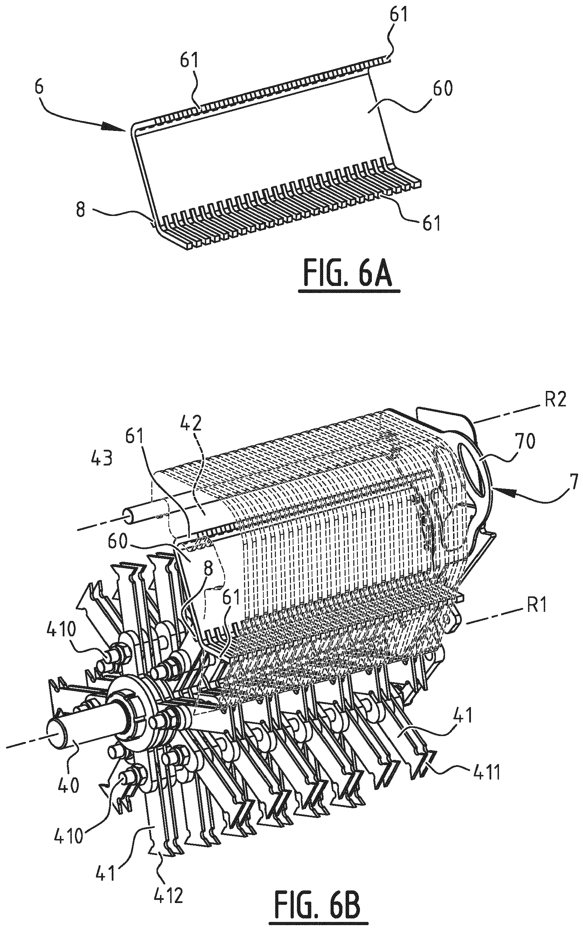

FIG. 5A shows a rear view of the spacer 6 of the leaf shredding device 4 by itself, with the scraper 8 attached, and FIG. 5B shows the spacer 6 in the same orientation within the context of the shredding device 4. Similarly, FIG. 6A shows a front view of the spacer 6 of the leaf shredding device 4 by itself, with the scraper 8 attached, and FIG. 6B shows the spacer 6 in the same orientation within the context of the shredding device 4. In FIGS. 5B and 6B the second cutting elements 42 have been made transparent such that the location and purpose of the spacer 6 as described above can be seen. The first cutting elements 41 can cleanly move between the second cutting elements 42 in their cutting position due to the teeth 61 acting as spacers therebetween. Accordingly, in the direction of the longitudinal axis of the shaft 40, the positions of the first cutting elements 41 correspond with associated teeth 61 of the spacer 6, and the second cutting elements are located between these positions. Accordingly, the first 41 and second cutting elements 42 can perform a scissoring movement to finely cut leaves L in the leaf shredder 4 whilst sufficiently maintaining the distance between then so as to reduce the chance of collision between the first 41 and second cutting elements 42. Thereby the longevity of the cutting elements 41, 42 is improved, which increases the maintenance interval and reduces the maintenance costs during the lifetime of the vehicle 1. Furthermore, the replaceable scraper 8 provides a self-cleaning function for the first cutting elements 41, without significantly increasing the costs and complexity of the vehicle 1.

The illustrative embodiments or examples described above are not to be construed as limiting the scope of protection, which is determined by the appended claims.

## Claims

1. Leaf shredding device (4), comprising:
a housing with at least one opening for input and/or output of leaves (L);
a shaft (40) mounted in the housing and rotatable about a rotation axis (R1);
at least one first cutting element (41) that, at least in use, extends radially outwardly from the shaft (40) and that is rotatable about the rotation axis (R1), wherein a free end (411) of the first cutting element (41) distal from the shaft (40) defines a path (P) by rotation about the rotation axis (R1);
at least one second cutting element (42) that is displaced from the at least one first cutting element (41) in the longitudinal direction of the shaft (40) and is located, at least in a cutting position thereof, within the path (P) of the first cutting element (41) as seen along the longitudinal direction of the shaft (40), such that the at least one first cutting element (41) moves along the at least one second cutting element (42) so as to cut leaves (L) therebetween;
**characterized in that** the device (4) further comprises:
a spacer (6) with a base (60) and at least one row of spaced-apart teeth (61) extending from the base (60) and at least partially away from the shaft (40), the row extending substantially in longitudinal direction of the shaft (40), and the spacer (6) being located outside the path (P) of the first cutting element (41) and positioned such that each of the at least one second cutting elements (42) is located, at least in the cutting position thereof, between two of the spaced-apart teeth (61).

2. Leaf shredding device (5) of claim 1, wherein the spacer (6) comprises at least two of the row of spaced-apart teeth (61), wherein the rows are spaced apart from each other.

3. Leaf shredding device (5) of claim 1 or 2, further comprising:
at least one third cutting element (8) located at the same position as the at least one first cutting element (41) as seen in the longitudinal direction of the shaft (40), and located on or outside the path (P) of the first cutting element (41) as seen along the longitudinal direction, such that the at least one first cutting element (41) moves along the third cutting element (8) so as to cut leaves (L) therebetween.

4. Leaf shredding device (5) of claim 3, wherein the at least one third cutting element (8) is mounted to the base (60) of the spacer (6).

5. Leaf shredding device (5) of claim 3 or 4, wherein the at least one third cutting element (8) is releasably mounted, so as to be replaceable.

6. Leaf shredding device (5) of any one of claims 3-5, wherein the third cutting element (8) is a single elongate cutting element (8) that extends in the longitudinal direction of the shaft (40).

7. Leaf shredding device (5) of any of the preceding claims, comprising a plurality of first and/or second cutting elements (41, 42).

8. Leaf shredding device (5) of any of the preceding claims, wherein the at least one second cutting element (42) is pivotable about a pivot axis (R2) between the cutting position, and a release position wherein the at least one second cutting element (42) is located outside the path (P) of the first cutting element (41) as seen along the longitudinal direction of the shaft (40), such that material that is not suitable to be cut can pass between the path (P) and the at least one second cutting element (42).

9. Leaf shredding device (5) of claim 8, wherein the each of the at least one second cutting elements (41) is located between two of the spaced-apart teeth (61) of the spacer (6) in both the cutting position and the release position thereof.

10. Leaf shredding device (5) of any of the preceding claims, wherein, in the cutting position, the at least one second cutting element (42) rests against the base (60) of the spacer (6).

11. Leaf processing system, comprising:
the leaf shredding device (5) of any of the preceding claims; and
a centrifugal fan (3), comprising a fan housing (30) that houses a fan shaft (31) rotatable about a second rotation axis (RF) and at least one fan blade (32) that extends radially outwardly from the fan shaft (31) and is rotatable about the second rotation axis (RF) by the fan shaft (31),
wherein the fan housing (30) comprises at least one inlet opening, substantially coaxial with the fan shaft (31) and at least one outlet opening that is configured to be connected to the opening of the leaf shredding device (5).

12. Leaf processing system of claim 11, wherein the at least one fan blade (32) is pivotable relative to the fan shaft (31).

13. Leaf processing system of claim 11 or 12, wherein the fan shaft (31) extends through at least one inlet opening, the fan shaft (31) further comprising at least one fourth cutting element (33) that extends radially outwardly from the fan shaft (31) and is rotatable about the second rotation axis (RF) by the fan shaft (31), wherein the at least one fourth cutting element (33) is located outside the housing (30) or in the at least one inlet opening.

14. Leaf processing system of any one of claims 11 - 13, wherein the fan housing (30) comprises two inlet openings, one on each side of the housing (30).

15. Vehicle (1) comprising the leaf processing system of any one of claims 11 - 14, configured to process leaves (L) from a surface (G) on which the vehicle (1) is located, preferably comprising means (2) for picking and/or sweeping up leaves (L), such that the leaves (L) are moved in the direction of the at least one inlet opening of the fan housing (30).
